(19) Europäisches Patentamt
European Patent Office
Office européen des brevets

(11) EP 2 518 469 A1

(12) EUROPÄISCHE PATENTANMELDUNG

(43) Veröffentlichungstag:
31.10.2012 Patentblatt 2012/44

(51) Int Cl.:
G01N 11/08 (2006.01)    G01N 11/00 (2006.01)

(21) Anmeldenummer: 11164363.1

(22) Anmeldetag: 29.04.2011

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: Sika Technology AG
6340 Baar (CH)

(72) Erfinder:
• Lootens, Didier
8001, Zürich (CH)

• Bourquin, Raphael
8468, Waltalingen (CH)
• Kuhn, Patrick
8046, Zürich (CH)
• Birkhofer, Beat
8006, Zürich (CH)

(74) Vertreter: Sika Patent Attorneys
Sika Technologies AG
Tüffenwies 16-22
8048 Zürich (CH)

(54) **Rheologiemesssystem und Verfahren zur Bestimmung mindestens eines Viskositätswerts**

(57)    Die vorliegende Anmeldung beschäftigt sich mit einem Rheologiemesssystem zur Bestimmung mindestens eines Viskositätswerts einer Probe (21). Das System umfasst:

- eine Extrusionseinrichtung (10) zur Aufnahme der Probe (21) und zur Abgabe der Probe (21) über eine Düse (50) in einen Auffangbereich;

- eine Fließgeschwindigkeitsmesseinrichtung zur Bestimmung einer Fließgeschwindigkeit (Q), mit der die Extrusionseinrichtung (10) die Probe (21) über die Düse (50) abgibt;

- eine Kraft-Messeinrichtung (15) zur Bestimmung einer Kraft (F), die zur Ausgabe der Probe (21) über die Düse (50) notwendig ist;

- eine Recheneinheit (60), die dazu ausgebildet ist, die Extrusionseinrichtung (10) derart anzusteuern, dass die Probe (21) über einen vorgegebenen Zeitraum bei konstanter Fließgeschwindigkeit (Q) ausgegeben wird, und die mit der Kraft-Messeinrichtung (15) zur Bestimmung der Kraft (F) in kommunikativer Verbindung steht, um den mindestens einen Viskositätswert (η) anhand der Fließgeschwindigkeit (Q) und der Kraft (F) zu ermitteln.

Fig. 1

EP 2 518 469 A1

**Beschreibung**

Die vorliegende Erfindung betrifft ein Rheologiemesssystem und ein Verfahren zur Bestimmung mindestens eines Viskositätswerts.

Die Rheologie ist die Wissenschaft, die sich mit dem Verformungs- und Fließverhalten von Material beschäftigt. Ein wesentliches Gebiet der Rheologie beschäftigt sich mit der Bestimmung der Viskosität oder Zähflüssigkeit von Fluiden. Die Viskosität wird für verschiedene Fluide anhand einer Scherviskosität $\eta$ bestimmt. Die Scherviskosität $\eta$ kann wie folgt berechnet werden:

$$\text{Scherviskosität } \eta = \frac{\text{Schubspannung } \sigma}{\text{Schergeschwindigkeit oder Scherrate } \dot{\gamma}}$$

Zur Bestimmung der Viskosität werden nach verschiedenen Prinzipien arbeitende Rheometer (Rotations-, Schwing-, Dehn-, Kapillarviskosimeter, Kugelfallviskositätsmeter, kontinuierlicher Rheometer) verwendet. Häufig wird die Viskosität mit einem Kapillarviskosimeter gemessen. Das zu Grunde liegende Messprinzip ist hier der Fluss des zu messenden Fluids durch ein dünnes Rohr. Ein festgelegtes Flüssigkeitsvolumen läuft bei gleichbleibendem Druck durch eine Kapillare einer vorgegebenen Länge und mit einem vorgegebenen Durchmesser. Es wird die benötigte Zeit für den Durchlauf des Flüssigkeitsvolumens gemessen. Die Viskosität kann dann anhand der gemessenen Zeit ermittelt werden. Ein Nachteil dieses Messverfahrens besteht darin, dass professionelle Geräte sehr teuer sind und deren Reinigung aufwändig ist.

Insbesondere wenn man derartige Kapillarviskosimeter zur Erzeugung von Kennlinien, die von dem aufgebrachten Druck oder einer Schubspannung abhängen, verwendet, ist der nötige Aufwand für exakte Ergebnisse sehr hoch. Man unterscheidet üblicherweise zwischen newtonschen Fluiden, deren Viskosität sich sehr einfach bestimmen lässt, und nichtnewtonschen Fluiden, die beispielsweise eine Strukturviskosität oder Dilatanz aufweisen. Die Fluide können thixotrop oder rheopex sein. Klebstoffe, Bindemittel, Dichtstoffe, Lebensmittel, Kosmetika, Pharmaka, Farben, Polymere, Lacke, Chemikalien, Zement und Beton, weisen beispielsweise häufig keine Dilatanz auf. Teilweise haben diese Stoffe auch eine Thixotropie, bei der in Abhängigkeit von einer mechanischen Krafteinwirkung und deren Dauer eine Veränderung der Viskosität auftritt.

Für die Herstellung von Produkten, die in die Klasse der nichtnewtonschen Fluide fallen, und deren Weiterentwicklung ist es wichtig, die Viskosität insbesondere in Abhängigkeit von der Schergeschwindigkeit bzw. der Temperatur genau zu erfassen. Des Weiteren ist es ein ständiges Bestreben, derartige Messverfahren so günstig wie möglich zu gestalten, so dass eine häufige Kontrolle des hergestellten Produkts erfolgen kann.

Es ist daher Aufgabe der vorliegenden Erfindung, ein Rheologiemesssystem anzugeben, das einfach handhabbar ist, exakte Messungen, insbesondere in Abhängigkeit von einer Schubspannung liefert, einfach zu warten und kostengünstig in der Anschaffung ist. Des Weiteren soll ein entsprechendes Verfahren zur Bestimmung mindestens eines Viskositätswerts angegeben werden.

Diese Aufgabe wird durch das Rheologiemesssystem gemäß dem Anspruch 1 gelöst.

Insbesondere wird die Aufgabe durch ein Rheologiemesssystem zur Bestimmung mindestens eines Viskositätswerts einer Probe gelöst, wobei das System umfasst:

- eine Extrusionseinrichtung zur Aufnahme der Probe und zur Abgabe der Probe über eine Düse in einen Auffangbereich;

- eine Fließgeschwindigkeitsmesseinrichtung zur Bestimmung einer Fließgeschwindigkeit, mit der die Extrusionseinrichtung die Probe über die Düse abgibt;

- eine Kraft-Messeinrichtung zur Bestimmung einer Kraft, die zur Ausgabe der Probe über die Düse aufgewandt wird;

- eine Recheneinheit, die dazu ausgebildet ist, die Extrusionseinrichtung derart anzusteuern, dass die Probe über einen vorgegebenen Zeitraum bei konstanter Fließgeschwindigkeit und/oder mit konstanter Kraft ausgegeben wird, und die mit der Kraftmesseinrichtung und/oder der Fließgeschwindigkeitsmesseinrichtung in kommunikativer Verbindung steht, um den mindestens einen Viskositätswert anhand der Fließgeschwindigkeit und der Kraft zu ermitteln.

Die genannte Vorrichtung ist besonders dazu geeignet, Viskositätswerte für nichtnewtonsche Fluide, insbesondere Klebstoffe, Bindemittel, Dichtstoffe, Lebensmittel, Kosmetika, Pharmaka, Farben, Polymere, Lacke, Chemikalien, Zement und Beton, zu bestimmen. Die Fließgeschwindigkeit kann ein Volumenstrom oder Massenstrom sein. Theoretisch ist es auch möglich, die Fließgeschwindigkeit anhand anderer Parameter zu approximieren.

Ein wesentlicher Punkt der vorliegenden Erfindung besteht darin, die Fließgeschwindigkeit, mit der eine bestimmte Probe über eine Düse abgegeben wird und die Kraft, die hierfür notwendig ist, zu ermitteln. Anhand dieser Werte lassen sich Viskositätswerte errechnen, die die tatsächlichen physikalischen Eigenschaften des Fluids bzw. der Probe sehr detailliert wiedergeben.

Erfindungsgemäß ist es möglich, entweder die Kraft, die zur Ausgabe der Probe über die Düse notwendig ist, oder die Fließgeschwindigkeit auf einem konstanten Wert zu halten und den jeweilig anderen Wert, nämlich die Kraft bzw. die Fließgeschwindigkeit anhand einer geeigneten Messeinrichtung zu ermitteln. Insofern kann die Kraftmesseinrichtung beispielsweise derart ausgebildet sein, dass sie lediglich einmal eine bestimmte Kraft bestimmt, da diese während der Versuchsdurchführung konstant ist. Ebenso kann die Fließgeschwindigkeitsmesseinrichtung derart ausgebildet sein, dass lediglich einmal eine Fließgeschwindigkeit bestimmt wird, da diese während der Versuchsdurchführung konstant ist. Andererseits kann entweder die Fließgeschwindigkeits- oder Kraft-Messeinrichtung derart mit der Recheneinheit in kommunikativer Verbindung stehen, dass die Fließgeschwindigkeits- bzw. Kraft-Messeinrichtung dazu dient, der Recheneinheit ein konstantes Einhalten einer vorgegebenen Fließgeschwindigkeit bzw. Kraft einzuhalten. Im Endeffekt liefern die Fließgeschwindigkeits- bzw. Kraft-Messeinrichtung dann eine Regelgröße an die Recheneinheit.

Vorzugsweise erfolgt ein Regeln der Extrusionseinrichtung derart, dass die Probe mit einer konstanten Fließgeschwindigkeit abgegeben wird, wobei die Recheneinheit anhand der Kraft-Messeinrichtung die Kraft, die zur Einhaltung der vorgegebenen Fließgeschwindigkeit notwendig ist, misst.

Die Recheneinheit kann dazu ausgebildet sein, die Extrusionseinrichtung derart anzusteuern, dass die Probe in einem ersten Zeitraum mit einer ersten Fließgeschwindigkeit und in einem zweiten Zeitraum mit einer zweiten Fließgeschwindigkeit, die sich von der ersten Fließgeschwindigkeit unterscheidet, ausgegeben wird, wobei im ersten Zeitraum eine erste Kraft und im zweiten Zeitraum eine zweite Kraft ermittelt wird, und die Recheneinheit mindestens zwei Viskositätswerte in Abhängigkeit von der Fließgeschwindigkeit ermittelt. Vorzugsweise können die Viskositätswerte in Abhängigkeit von einer Scherrate bestimmt werden, die sich durch die Fließgeschwindigkeit ermitteln lässt. Um die physikalischen Eigenschaften von nichtnewtonschen Fluiden genau zu bestimmen, reicht die Ermittlung eines einzigen Viskositätswerts häufig nicht aus. Es ist vorteilhaft, wenn mehrere Viskositätswerte, insbesondere in Abhängigkeit von einer Scherrate, ermittelt werden. Vorzugsweise können so Kennlinien bestimmt werden, die die Viskositätswerte in Abhängigkeit von der vorliegenden Scherrate angeben, und eine exakte Einordnung des gemessenen Fluids ermöglichen.

Die erste Fließgeschwindigkeit kann mindestens um einen Faktor f kleiner sein als die zweite Fließgeschwindigkeit, wobei der Faktor f beispielsweise 10, 100 oder 1000 sein kann. Insofern können sich die erste und die zweite Fließgeschwindigkeit um ein 10faches, ein 100faches oder ein 1000faches unterscheiden. Die Viskosität einer Probe lässt sich wesentlich genauer bestimmen, wenn eine Vielzahl von Messungen bei unterschiedlichen Fließgeschwindigkeiten erfolgt. Dies gilt insbesondere für nicht newtonsche Fluide.

Die Recheneinheit kann dazu ausgebildet sein, eine Scherrate anhand der folgenden Formel zu berechnen:

$$\dot{\gamma} = \frac{4Q}{\pi R^3} K_s$$

, wobei $K_s$ ein Scherratenkorrekturfaktor und R ein Düsenradius ist. Es ist also möglich, anhand der Fließgeschwindigkeit bei entsprechender Kenntnis der verwendeten Düse eine Scherrate zu ermitteln. Da sich die Fließgeschwindigkeit sehr einfach bestimmen lässt, kann an dieser Stelle auf störanfällige Sensoren verzichtet werden.

Die Recheneinheit kann dazu ausgebildet sein, eine Schubspannung anhand der folgenden Formel zu berechnen:

$$\sigma = \frac{F}{4\pi R(L + L_0)}$$

, wobei L eine Düsenlänge, R ein Düsenradius und $L_0$ ein Längen-Korrekturfaktor ist. Es lässt sich also anhand der aufgewandten Kraft F zur Abgabe der Probe über die Düse eine Schubspannung ermitteln, die die tatsächlich herrschenden Verhältnisse sehr gut beschreibt. Auch hier ist es nicht notwendig, aufwändige Sensormittel, beispielsweise Drucksensoren, vorzusehen.

Die Extrusionseinrichtung kann mindestens einen Extrusionskolben zur Applikation der Kraft F umfassen, wobei der Schubspannungskorrekturfaktor vorzugsweise von einer Kolbengeschwindigkeit, mit der der Extrusionskolben bewegt wird, abhängt.

Es ist also möglich, die Probe unter Verwendung eines Extrusionskolbens durch die Düse zu drücken und so abzugeben. In diesem Fall lässt sich die Fließgeschwindigkeit durch ein Messen der Geschwindigkeit, mit der der Kolben bewegt wird - der Kolbengeschwindigkeit - bestimmen.

Des Weiteren kann die Kolbengeschwindigkeit verwendet werden, um einen adäquaten Längenkorrekturfaktor zu ermitteln. Dieser Längenkorrekturfaktor hängt von der verwendeten Düse ab.

Die Extrusionseinrichtung kann eine Aufnahme zum Einlegen einer Verpackung, insbesondere einer Tube, einer Kartusche oder sonstige Probenaufnahmebehälter, mit einem Auslass umfassen, wobei die Extrusionseinrichtung dazu ausgebildet ist, die Probe aus der Verpackung über die Düse abzugeben.

Vorzugsweise ist es also nicht notwendig, die Probe in die Extrusionseinrichtung einzufüllen. Stattdessen kann sich die Probe in einer Verpackung befinden, die sich in die Extrusionseinrichtung, insbesondere eine hierfür vorgesehene Aufnahme, einlegen lässt. Dies hat den Vorteil, dass die Extrusionseinrichtung bis auf die Düse nicht mit der Probe in Kontakt gerät, so dass es nicht notwendig ist, die Extrusionseinrichtung zu reinigen. Des Weiteren kann die Extrusionseinrichtung derart ausgebildet sein, dass die Probe in der Verpackung eingelegt werden kann, in der das Produkt auch verkauft werden soll. Insofern ist es ohne Weiteres möglich, hergestellte Produkte stichprobenartig zu überprüfen. Einer besonderen Vorbereitung und/oder Verarbeitung (z.B. Luftausschluss beim Umfüllen der Probe) bedarf dies nicht. Des Weiteren ist so sichergestellt, dass die Probe nicht aufgrund von unsachgemäßer Handhabung fehlerhafte Viskositätswerte liefert. Eine Verunreinigung der Probe kann so weitestgehend ausgeschlossen werden. Für die Qualitätsüberprüfung ist ein derartiges Rheologiemesssystem sehr vorteilhaft.

Die Düse ist vorzugsweise derart ausgebildet, dass sie sich unmittelbar an der Verpackung befestigen lässt. Die Düse kann mindestens zweiteilig aufgebaut sein, wobei eine Gewindeschraube zur Befestigung an der Verpackung der Probe und eine Führungseinrichtung mit einer Düsenöffnung vorgesehen ist. Insofern kann die Düse derart ausgebildet werden, dass lediglich die Führungseinrichtung mit der Probe in unmittelbaren Kontakt gerät, so dass lediglich dieses eine Element nach der Durchführung der Viskositätsmessung gereinigt werden muss. Dies spart Zeit und erhöht die Effektivität des Rheologiemesssystems.

Die zur Messung verwendete Düse hat vorzugsweise einen vorgegebenen Düsendurchmesser und eine vorgegebene Düsenlänge, wobei der Düsendurchmesser zwischen 0,1 und 40 mm, vorzugsweise zwischen 0,5 und 8 mm, und die Düsenlänge vorzugsweise zwischen 1 und 200 mm beträgt. Es hat sich herausgestellt, dass derartige Düsen zur Bestimmung der Viskositätswerte von nicht newtonschen Fluiden, z.B. Klebemitteln und Dichtstoffen, besonders geeignet sind.

Vorzugsweise ist der Düsendurchmesser der Düse im Wesentlichen gleich dem Auslassdurchmesser der die Probe enthaltenden Verpackung. Es hat sich herausgestellt, dass die besten Messergebnisse dann erzielt werden, wenn der Düsendurchmesser im Wesentlichen mit dem Auslassdurchmesser übereinstimmt. Dies gilt besonders für nichtnewtonsche Fluide.

In einer Ausführungsform kann das Rheologiemesssystem eine Wiegeeinrichtung umfassen, die zur Bestimmung der Masse der Probe, die über die Düse abgegeben wird, angeordnet ist. Diese Massenbestimmung kann dazu verwendet werden, eine Fließgeschwindigkeit zu bestimmen. Andererseits ist es ebenfalls möglich, mittels der Massenbestimmung einen weiteren Test durchzuführen, der es ermöglicht, physikalische Eigenschaften der Probe zu charakterisieren.

So kann die Wiegeeinrichtung derart beabstandet von der Düse angeordnet sein, dass mittels der Wiegeeinrichtung ein Abrissgewicht der Probe bestimmbar ist, wobei die Recheneinheit dazu ausgebildet ist, das Abrissgewicht vorzugsweise in Abhängigkeit von einer Scherrate zu bestimmen.

Des Weiteren wird die genannte Aufgabe durch ein Verfahren zur Bestimmung mindestens eines Viskositätswerts gelöst, wobei das Verfahren die folgenden Schritte aufweist:

- Abgeben einer Probe über eine Düse mit einer Fließgeschwindigkeit;

- Messen mindestens einer Kraft, die zur Abgabe der Probe mit der Fließgeschwindigkeit notwendig ist;

- Berechnen des mindestens einen Viskositätswerts anhand der Fließgeschwindigkeit und der Kraft mittels einer Recheneinheit;

- Ausgeben des mindestens einen Viskositätswerts mittels einer Anzeigeinheit und/oder speichern.

Das Verfahren kann auch derart abgewandelt werden, dass ein Abgeben einer Probe über eine Düse unter Aufwendung einer konstanten Kraft vorgenommen wird, wobei die Fließgeschwindigkeit anhand einer Messeinrichtung gemessen wird. Auch bei diesem Verfahren lässt sich erfindungsgemäß mindestens ein Viskositätswert anhand der Fließgeschwindigkeit und der Kraft mittels einer Recheneinheit berechnen.

Es ergeben sich auch für die Verfahren ähnliche Vorteile, wie diese schon in Verbindung mit der Vorrichtung beschrieben wurden. Insbesondere lassen sich die Viskositätswerte effizient und akkurat bestimmen.

Das erst genannte Verfahren kann derart durchgeführt werden, dass eine Vielzahl von Kraftmessungen bei sich unterscheidenden Fließgeschwindigkeiten vorgenommen werden. Weiterhin kann eine Vielzahl von Viskositätswerten in Abhängigkeit von den Fließgeschwindigkeiten berechnet und ausgegeben werden. Insofern ist es möglich, eine charakteristische Kennlinie der Viskosität für eine bestimmte Probe zu ermitteln und anzuzeigen.

Des Weiteren wird die Aufgabe durch ein computerlesbares Medium mit Instruktionen zur Ausführung auf einer Recheneinheit gelöst, wobei die Instruktionen das Verfahren wie vorab beschrieben umsetzen, wenn diese auf der Recheneinheit ausgeführt werden.

Nachfolgend wird die Erfindung mittels mehrerer Ausführungsbeispiele beschrieben, die anhand von Abbildungen näher erläutert werden. Hierbei zeigen:

Fig. 1    ein Rheologiemesssystem zur Bestimmung mindestens eines Viskositätswerts einer Probe mit einer Extrusionseinrichtung;

Fig. 2    einen Querschnitt durch die Extrusionseinrichtung aus Fig. 1;

Fig. 3    die zu dem Rheologiemesssystem gehörende Recheneinheit mit entsprechenden Sensoren und Aktuatoren;

Fig. 4    einen Querschnitt durch eine Düse, die in dem Rheologiemesssystem gemäß Fig. 1 verwendet wird.

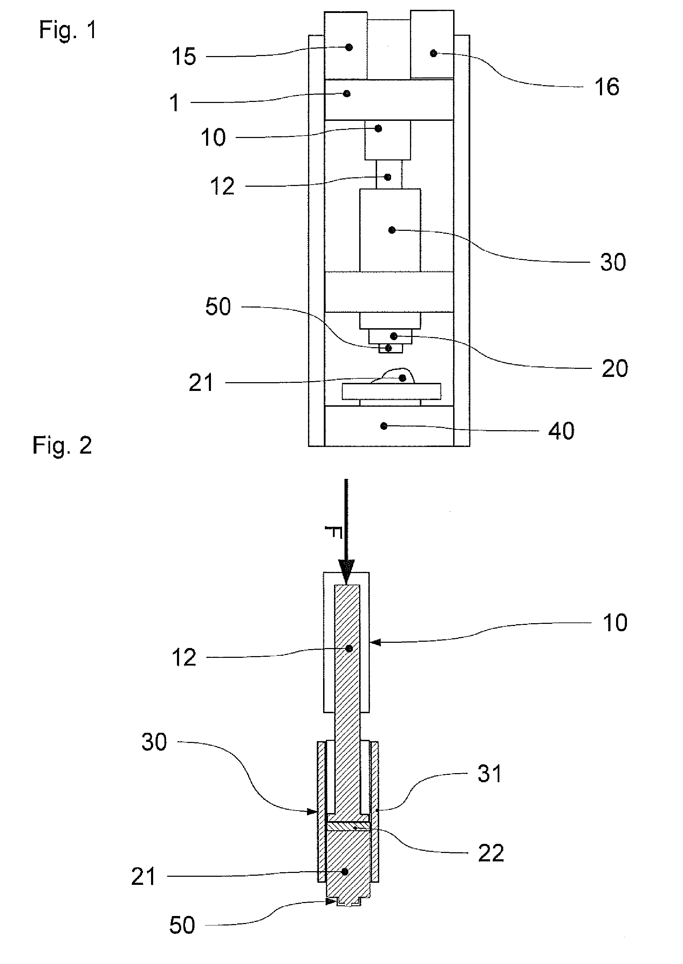

Fig. 1 zeigt wesentliche Komponenten des erfindungsgemäßen Rheologiemesssystems. Diese umfassen eine Halterung, die eine Extrusionseinrichtung 10 derart hält, dass Teilmengen einer Probe 21 über eine Extrusionsdüse 50 abgegeben werden können. Diese Teilmengen werden in einem Auffangbereich aufgefangen, der durch den Wiegeteller einer Wiegeeinrichtung 40 gebildet wird. Die Extrusionseinrichtung 10 hat eine Probenhalterung 30, in die eine Probenpackung 20, die die Probe 21 beinhaltet, eingelegt werden kann. Vor dem Einlegen der Probenpackung 20 wird diese wie in der Fig. 2 gezeigt, mit der Extrusionsdüse 50 versehen. Somit kann eine kontrollierte Abgabe der Probe sichergestellt werden.

Die Extrusionseinrichtung 10 weist einen Extrusionskolben 12 auf, der von oben in die Probenhalterung 30 hineinragt und derart mit einer Probenabdeckung 22 in Wirkverbindung tritt, dass die Probe 21 aus der Probenpackung 20 über eine Austrittsöffnung in die Extrusionsdüse 50 austritt. Alternativ kann der Extrusionskolben 12 derart auf die Probenpackung 20 einwirken, dass diese insgesamt zusammengedrückt wird und die Probe 21 entsprechend austritt. Der Extrusionskolben 12 kann mittelbar oder unmittelbar auf die Probe einwirken.

Zum Antreiben des Extrusionskolbens 12 ist ein Servomotor 16 vorgesehen, der den Extrusionskolben 12 in einer vertikalen Richtung antreibt.

Vorzugsweise sind die Wiegeeinrichtung 40 und die Extrusionsdüse 50 derart voneinander beabstandet, dass die Probe nach dem Austritt aus der Düsenöffnung der Extrusionsdüse 50 nicht unmittelbar auf dem Wiegeteller der Wiegeeinrichtung 40 aufliegt. Die Probe 21 hängt also so lange in der Luft, bis diese abreißt und auf die Wiegeeinrichtung 40 herunterfällt. In einer besonders bevorzugten Ausführungsform lässt sich die Distanz zwischen dem Wiegeteller und der Extrusionsdüse 50 frei einstellen.

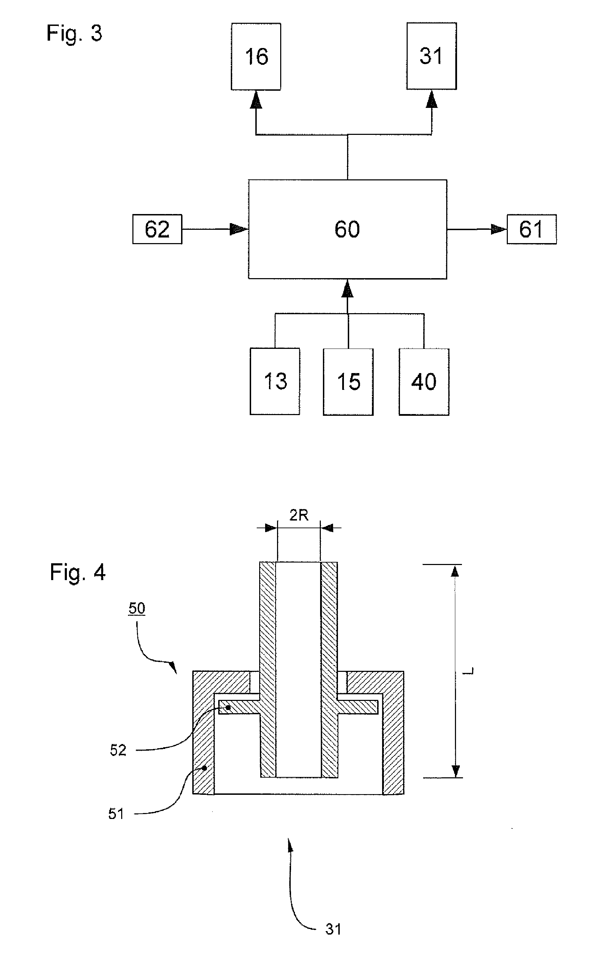

Auch die an der Probenpackung 20 anbringbare Extrusionsdüse 50 ist vorzugsweise zweiteilig aufgebaut und umfasst einen Gewindering 51 und eine Führungseinrichtung 52. Die Führungseinrichtung 52 bildet die eigentliche Düse. Die Probe 21 wird in dieser über einen Kanal mit einem konstanten Düsenradius R geführt. Die Düse hat eine Düsenlänge L, wie dies aus der Fig. 4 ersichtlich ist. Der Gewindering 51 hält die Führungseinrichtung 52 und weist ein Gewinde auf, mittels dessen die Extrusionsdüse 50 an einem Auslass der Probenpackung 20 befestigt werden kann. Eine einteilige Ausbildung der Extrusionsdüse 50 ist ebenso möglich.

Das Rheologiemesssystem wird durch eine Recheneinheit 60 (vgl. Fig. 3) gesteuert, die die eigentlichen Viskositätswerte ermittelt. Diese Recheneinheit 60 hat mindestens eine Anzeigeeinheit 61 zum Anzeigen von Messdaten sowie eine Eingabeeinheit 62, die es einem Benutzer ermöglicht, Daten einzugeben. Beispielsweise kann mittels der Eingabeeinheit 62 eine Probenbezeichnung der Probe 21 eingegeben werden. Des Weiteren können spezifische Parameter, die sich beispielsweise auf die Probe 21 und/oder die verwendete Extrusionsdüse 50 beziehen, erfasst werden.

Des Weiteren sind Sensoren und Aktuatoren vorgesehen, die es der Recheneinheit 60 ermöglichen, die Probe 21 zu analysieren. Die Aktuatoren umfassen beispielsweise den Servomotor 16, der den Extrusionskolben 12 der Extrusionseinrichtung 10 antreibt, und eine Heizeinrichtung 31 (vgl. auch Fig. 2), die es ermöglicht, die Probe 21 auf eine vorgegebene Temperatur aufzuheizen. Es können also auch temperaturspezifische Veränderungen erfasst werden.

Des Weiteren hat die Recheneinheit 60 Sensoren in Form von einer Positionsbestimmungseinrichtung 13, einer Kraftmesseinrichtung 15 und der Wiegeeinrichtung 40. Die einzelnen Sensoren erfassen Messsignale und führen diese der Recheneinheit 60 zu.

Erfindungsgemäß kann die Bestimmung einer charakteristischen Kennlinie für eine bestimmte Probe 21 wie folgt durch die Recheneinheit 60 gewährleistet werden. Nach dem Einlegen der Probenpackung 20 in die Probenhalterung 30 aktiviert die Recheneinheit 60 den Servomotor 16, so dass der Extrusionskolben 12 nach unten auf die Probenhalterung 30 zu bewegt wird und die Probe 21 mit einer vorgegebenen Fließgeschwindigkeit Q aus der Probenpackung 20 presst. Um die Fließgeschwindigkeit Q einzustellen, steuert die Recheneinheit 60 den Servomotor 16 derart, dass der Extrusionskolben 12 mit einer konstanten Geschwindigkeit angetrieben wird. Diese konstante Geschwindigkeit kann beispielsweise mittels der Positionsbestimmungseinrichtung 13 erfasst werden. Die Recheneinheit 60 kennt also die Kolbengeschwindigkeit V, mit der sich der Extrusionskolben 12 bewegt, und kann eine entsprechende Fließgeschwindigkeit Q ableiten.

Um die Probe 21 durch die Extrusionsdüse 50 zu drücken, ist eine bestimmte Kraft, nämlich die Extrusionskraft F notwendig, die von der Kolbengeschwindigkeit V abhängt. Wie in der Fig. 1 gezeigt, verfügt das Rheologiemesssystem über eine Kraftmesseinrichtung 15, die diese Extrusionskraft F erfasst und in die Recheneinheit eingibt. Der Recheneinheit ist es möglich, anhand der Extrusionskraft F eine für die Probe 21 spezifische Schubspannung σ und anhand der Fließgeschwindigkeit Q eine geschwindigkeitsspezifische Scherrate $\dot{\gamma}$ zu ermitteln.

Anhand dieser Werte lässt sich ein probenspezifischer Viskositätswert ermitteln, z.B.:

$$\text{Scherviskosität} \quad \eta = \frac{\sigma}{\dot{\gamma}}$$

Der ermittelte Viskositätswert kann dann über die Anzeigeeinheit 61 ausgegeben werden.

Beispielsweise kann die Recheneinheit 60 die Scherrate $\dot{\gamma}$ anhand der folgenden Formel berechnen:

$$\dot{\gamma} = \frac{4Q}{\pi R^3} K_S$$

Hierbei ist $K_s$ ein Scherratenkorrekturfaktor und R der Düsenradius, wie dieser in Fig. 4 gezeigt wird. Ein geeigneter Wert für den Scherratenkorrekturfaktor $K_s$ lässt sich anhand von Tests ermitteln. Theoretisch wäre es möglich, einen entsprechenden Wert über die Eingabeeinheit 62 einzugeben. Vorzugsweise ist das Rheologiemesssystem derart vorkonfiguriert, dass entsprechende Werte bereits eingestellt sind.

Die Schubspannung σ kann beispielsweise gemäß der folgenden Formel berechnet werden:

Die Düsenlänge L und der Düsenradius R der Extrusionsdüse 50 können dem Rheologiemesssystem bekannt sein oder vom Benutzer eingegeben werden. $L_0$ ist ein Längen-Korrekturfaktor, der gegebenenfalls von der Kolbengeschwindigkeit V abhängt.

Insgesamt kann die Recheneinheit 60 sowohl die Scherrate $\dot{\gamma}$ sowie die Schubspannung σ anhand der gemessenen Werte (Extrusionskraft F und Kolbengeschwindigkeit V) ausreichend genau bestimmen und somit für eine bestimmte Kolbengeschwindigkeit V oder Schubspannung σ einen adäquaten Viskositätswert ermitteln.

Vorzugsweise ist das Rheologiemesssystem derart ausgelegt, dass nicht nur ein Viskositätswert für eine bestimmte Fließgeschwindigkeit Q oder eine bestimmte Kolbengeschwindigkeit V oder eine bestimmte Schubspannung σ bestimmt wird.

So könnte es sich beispielsweise bei der Probe 21 um einen Klebstoff oder einen Dichtstoff für Fugen handeln, der eine gewisse Strukturviskosität oder Dilatanz und/oder Thixotropie/Rheopexie aufweist. Um die Qualität dieser Probe 21 bestimmen zu können, ist es notwendig, eine Vielzahl von Viskositätswerten η für unterschiedliche Schubspannungen σ zu bestimmen. Daher kann die Recheneinheit 60 derart ausgebildet sein, dass sie den Servomotor 16 so ansteuert, dass der Extrusionskolben 12 über eine erste Strecke mit einer ersten Kolbengeschwindigkeit V1, über eine zweite Strecke mit einer zweiten Kolbengeschwindigkeit V2 und über eine dritte Strecke mit einer dritten Kolbengeschwindigkeit V3 angetrieben wird. Zu jeder der Kolbengeschwindigkeiten V1, V2, V3 können entsprechende Extrusionskräfte F1, F2, F3 ermittelt werden, so dass sich mehrere Scherviskositäten η berechnen lassen. Diese Scherviskositäten η können beispielsweise in Form eines Diagramms auf der Anzeigeeinheit 61 dargestellt werden. Es sollte für den hier tätigen Fachmann offensichtlich sein, dass die Recheneinheit 60 den Servomotor 16 derart steuern kann, dass der Extrusionskolben 12 während eines Messzyklus mit einer Vielzahl von unterschiedlichen Kolbengeschwindigkeiten V betrieben wird.

Vorzugsweise unterscheiden sich die einzelnen Kolbengeschwindigkeiten V deutlich, so dass eine charakteristische Kennlinie für die Probe 21 entsteht.

In dem vorbeschriebenen Ausführungsbeispiel wurde eine bestimmte Extrusionsdüse 50 mit einer bestimmten Düsenlänge L und einem bestimmten Düsenradius R verwendet. Es sollte für den hier tätigen Fachmann offensichtlich sein, dass andere Düsen mit sich unterscheidenden Düsenradien R und Düsenlängen L verwendet werden können. Die Wahl der Extrusionsdüse 50 hängt maßgeblich von der zu testenden Probe 21 ab. Die einzelnen genannten Berechnungsregeln lassen sich jedoch derart anpassen, dass sie für beliebige Extrusionsdüsen 50 ein akkurates Ergebnis liefern.

Im vorab beschriebenen Beispiel umfasst das Rheologiemesssystem eine Heiz-/Kühleinrichtung 31, die es ermöglicht, die Probe 21 auf eine bestimmte Temperatur vorzuheizen. Theoretisch wäre es möglich, diese Heizeinrichtung 31 wegzulassen und die Viskositätsmessungen ohne die Berücksichtigung der Temperatur durchzuführen. Andererseits wäre es ebenfalls möglich, verschiedene Viskositätstests bei unterschiedlichen Temperaturen durchzuführen, so dass sich für die Probe 21 sehr charakteristische Messwerte ergeben.

Im vorab beschriebenen Ausführungsbeispiel steuert die Recheneinheit 60 den Servomotor 16 derart, dass über einen vorbestimmten Zeitraum eine konstante Fließgeschwindigkeit Q vorliegt. Es sollte für den hier tätigen Fachmann offensichtlich sein, dass dieser vorbestimmte Zeitraum relativ kurz bemessen sein kann, so dass die Extrusionskraft bei einer Vielzahl von sich unterscheidenden Kolbengeschwindigkeiten V erfasst werden kann.

Im beschriebenen Ausführungsbeispiel wird die Fließgeschwindigkeit Q durch die Positionsbestimmungseinrichtung 13 im Endeffekt durch die Messung der Kolbengeschwindigkeit V ermittelt. Theoretisch wäre es jedoch auch möglich, einen Massenstrom oder Volumenstrom mittels der Wiegeeinrichtung 40 zu ermitteln.

Das beschriebene Rheologiemesssystem erfasst ausschließlich verschiedene Viskositätswerte. Dieses System kann jedoch auch dazu verwendet werden, ein Abrissgewicht der Probe 21 zu bestimmen. Im Endeffekt kann die Probe 21 derart zähflüssig sein, dass diese so lange an der Extrusionsdüse 50 haftet, bis die bereits ausgetretene Probe 21 ein bestimmtes Gewicht hat, das dazu führt, dass die Probe 21 abreißt und auf die Wiegeeinrichtung 40 fällt. Die Recheneinheit 60 kann also anhand der Wiegeeinrichtung 40 den Abrisszeitpunkt und/oder das Gewicht der abgerissenen Probe 21 bestimmen. Dieses Gewicht ist ebenfalls ein charakteristischer Wert, der einer bestimmten Probe 21 zugeordnet werden kann. Vorzugsweise wird das Abrissgewicht im Bezug zur vorliegenden $\dot{\gamma}$ Scherrate gesetzt. Auch das Abrissgewicht kann sich in Abhängigkeit von der Scherrate $\dot{\gamma}$ unterscheiden.

Bezugszeichenliste

| 1 | Halterung |
|---|---|
| 10 | Extrusionseinrichtung |
| 12 | Extrusionskolben |
| 13 | Positionsbestimmungseinrichtung |
| 15 | Kraftmesseinrichtung |
| 16 | Servomotor |
| 20 | Probenpackung |
| 21 | Probe |
| 22 | Probenabdeckung |
| 30 | Probenhalterung |
| 31 | Heizeinrichtung |
| 40 | Wiegeeinrichtung |

| | |
|---|---|
| 50 | Extrusionsdüse |
| 51 | Gewindering |
| 52 | Führungseinrichtung |
| 60 | Recheneinheit |
| 61 | Anzeigeeinheit |
| 62 | Eingabeeinheit |
| F | Extrusionskraft |
| V | Kolbengeschwindigkeit |
| Q | Fließgeschwindigkeit |
| R | Düsenradius |
| 2R | Düsendurchmesser |
| L | Düsenlänge |
| $\dot{\gamma}$ | Scherrate |
| σ | Schubspannung |
| η | Scherviskosität |
| $K_s$ | Scherratenkorrekturfaktor |
| Lo | Längen-Korrekturfaktor |

**Patentansprüche**

1.  Rheologiemesssystem zur Bestimmung mindestens eines Viskositätswerts (η) einer Probe (21), insbesondere von einem nicht newtonschen Fluid, umfassend:

    - eine Extrusionseinrichtung (10) zur Aufnahme der Probe (21) und zur Abgabe der Probe (21) über eine Düse (50) in einen Auffangbereich;
    - eine Fließgeschwindigkeitsmesseinrichtung zur Bestimmung einer Fließgeschwindigkeit (Q), mit der die Extrusionseinrichtung (10) die Probe (21) über die Düse (50) abgibt;
    - eine Kraft-Messeinrichtung (15) zur Bestimmung einer Kraft (F), die zur Ausgabe der Probe (21) über die Düse (50) aufgewandt wird;
    - eine Recheneinheit (60), die dazu ausgebildet ist, die Extrusionseinrichtung (10) derart anzusteuern, dass die Probe (21) über einen vorgegebenen Zeitraum bei konstanter Fließgeschwindigkeit (Q) und/oder mit konstanter Kraft (F) ausgegeben wird, und die mit der Kraft-Messeinrichtung (15) und/oder der Fließgeschwindigkeitsmesseinrichtung in kommunikativer Verbindung steht, um den mindestens einen Viskositätswert (η) anhand der Fließgeschwindigkeit (Q) und der Kraft (F) zu ermitteln.

2.  Rheologiemesssystem nach Anspruch 1,
    **dadurch gekennzeichnet, dass**
    die Recheneinheit (60) dazu ausgebildet ist, die Extrusionseinrichtung (10) derart anzusteuern, dass die Probe (21) über den vorgegebenen Zeitraum bei konstanter Fließgeschwindigkeit (Q) ausgegeben wird, wobei die Recheneinheit (60) mit der Kraft-Messeinrichtung (15) zur Bestimmung der Kraft (F) in kommunikativer Verbindung steht.

3.  Rheologiemesssystem nach Anspruch 1 oder 2,
    **dadurch gekennzeichnet, dass**
    die Recheneinheit (60) dazu ausgebildet ist, die Extrusionseinrichtung (10) derart anzusteuern, dass die Probe (21) in einem ersten Zeitraum mit einer ersten Fließgeschwindigkeit (Q) und in einem zweiten Zeitraum mit einer zweiten sich von der ersten Fließgeschwindigkeit (Q) unterscheidenden Fließgeschwindigkeit (Q) ausgegeben wird, wobei im ersten Zeitraum eine erste Kraft (F) und im zweiten Zeitraum eine zweite Kraft (F) ermittelt wird, und die Recheneinheit mindestens zwei Viskositätswerte (η) in Abhängigkeit von der Fließgeschwindigkeit (Q), insbesondere in Abhängigkeit von einer anhand der Fließgeschwindigkeit (Q) bestimmten Scherrate ($\dot{\gamma}$), ermittelt.

4.  Rheologiemesssystem nach einem der vorhergehenden Ansprüche, insbesondere nach Anspruch 3,
    **dadurch gekennzeichnet, dass**
    die erste Fließgeschwindigkeit (Q) mindestens um einen Faktor (f) kleiner ist als die zweite Fließgeschwindigkeit (Q), wobei der Faktor (f) größer oder gleich 10, insbesondere größer oder gleich 100, insbesondere größer oder gleich 1000, ist.

**5.** Rheologiemesssystem nach einem der vorhergehenden Ansprüche,
**dadurch gekennzeichnet, dass**

die Recheneinheit (60) dazu ausgebildet ist, eine Scherrate ($\dot{\gamma}$) anhand der folgenden Formel zu berechnen:

$$\dot{\gamma} = \frac{4Q}{\pi R^3} K_S$$

, wobei $K_s$ ein Scherraten-Korrekturfaktor ist.

**6.** Rheologiemesssystem nach einem der vorhergehenden Ansprüche,
**dadurch gekennzeichnet, dass**
die Recheneinheit (60) dazu ausgebildet ist, eine Schubspannung (σ) anhand der folgenden Formel zu berechnen:

$$\sigma = \frac{F}{4\pi R\ (L + L_0)}$$

, wobei L eine Düsenlänge, R ein Düsenradius und $L_0$ ein Längen-Korrekturfaktor sind.

**7.** Rheologiemesssystem nach einem der vorhergehenden Ansprüche, insbesondere nach Anspruch 6,
**dadurch gekennzeichnet, dass**
die Extrusionseinrichtung (10) mindestens einen Extrusionskolben (12) zur Applikation der Kraft (F) umfasst und die Recheneinheit (60) dazu ausgebildet ist, der Schubspannungs-Korrekturfaktor ($L_0$) in Abhängigkeit von einer Kolbengeschwindigkeit (V), mit der der Extrusionskolben (12) bewegt wird, zu berechnen.

**8.** Rheologiemesssystem nach einem der vorhergehenden Ansprüche,
**dadurch gekennzeichnet, dass**
die Extrusionseinrichtung (10) eine Aufnahme zum Einlegen einer Verpackung (20), insbesondere einer Tube, einer Kartusche, mit einem Auslass umfasst, wobei die Extrusionseinrichtung (10) dazu ausgebildet ist, die Probe (21) aus der Verpackung über die Düse (50) abzugeben.

**9.** Rheologiemesssystem nach einem der vorhergehenden Ansprüche, insbesondere nach Anspruch 8,
**dadurch gekennzeichnet, dass**
die Düse (50) mindestens zweiteilig aufgebaut ist, umfassend eine Gewindeschraube (51) zur Befestigung an der/ einer Verpackung (20) der Probe (21) und eine Führungseinrichtung (52) mit Düsenöffnung.

**10.** Rheologiemesssystem nach einem der vorhergehenden Ansprüche,
**dadurch gekennzeichnet, dass**
die Düse (50) einen vorgegebenen Düsendurchmesser (2R) und eine vorgegebene Düsenlänge (L) hat, wobei der Düsendurchmesser (2R) vorzugsweise im Intervall zwischen 0,1 und 40 Millimeter (mm) und die Düsenlänge vorzugsweise im Intervall zwischen 1 und 200 Millimeter (mm) liegen.

**11.** Rheologiemesssystem nach einem der vorhergehenden Ansprüche, insbesondere nach Anspruch 10,
**dadurch gekennzeichnet, dass**
ein/der Düsendurchmesser (2R) der Düse (50) im Wesentlichen gleich einem Auslassdurchmesser einer/der die Probe (21) enthaltenden Verpackung (20) ist.

**12.** Rheologiemesssystem nach einem der vorhergehenden Ansprüche,
**gekennzeichnet durch**
eine Wiegeeinrichtung (40), die zur Bestimmung der Masse der Probe (21), die über die Düse (50) abgegeben wird, angeordnet ist.

**13.** Rheologiemesssystem nach einem der vorhergehenden Ansprüche,
**dadurch gekennzeichnet, dass**
die Wiegeeinrichtung (40) derart beabstandet von der Düse (50) angeordnet ist, dass mittels der Wiegeeinrichtung ein Abrissgewicht der Probe (21) bestimmbar ist, wobei die Recheneinheit (60) dazu ausgebildet ist, das Abrissgewicht vorzugsweise in Abhängigkeit von einer Scherrate ($\dot{\gamma}$) zu bestimmen.

**14.** Verfahren zur Bestimmung mindestens eines Viskositätswerts ($\eta$), insbesondere mittels eines Rheologiemesssystems nach einem der vorhergehenden Ansprüche,
umfassend die Schritte:

- Abgeben einer Probe (21) über eine Düse (50) mit einer Fließgeschwindigkeit (Q);
- Messen mindestens einer Kraft (F), die zur Abgabe der Probe (21) mit der Fließgeschwindigkeit (Q) notwendig ist;
- Berechnen des mindestens einen Viskositätswerts ($\eta$) anhand der Fließgeschwindigkeit (Q) und der Kraft (F) mittels einer Recheneinheit (60);
- Ausgeben des mindestens einen Viskositätswerts ($\eta$) mittels einer Anzeigeeinheit (61).

**15.** Verfahren nach Anspruch 14,
**dadurch gekennzeichnet, dass**
eine Vielzahl von Kraftmessungen bei sich unterscheidenden Fließgeschwindigkeiten (Q) vorgenommen und eine Vielzahl von Viskositätswerten ($\eta$) in Abhängigkeit von den Fließgeschwindigkeiten (Q) berechnet und ausgegeben werden.

**16.** Verfahren nach Anspruch 14 oder 15,
**dadurch gekennzeichnet, dass**
mindestens eine Scherrate ($\dot{\gamma}$) der abgegebenen Probe (21) anhand der Fließgeschwindigkeit (Q) und/oder eine Schubspannung ($\sigma$) anhand der gemessenen Kraft (F) berechnet wird.

**17.** Computerlesbares Medium mit Instruktionen zur Ausführung auf einer Recheneinheit (60), wobei die Instruktionen das Verfahren nach einem der Ansprüche 14 bis 16 umsetzen, wenn sie auf der Recheneinheit ausgeführt werden.

Fig. 1

Fig. 2

Fig. 3

16          31

62 →  60  → 61

13    15    40

Fig. 4

2R

50

52

51

L

31

Europäisches
Patentamt

European
Patent Office

Office européen
des brevets

# EUROPÄISCHER RECHERCHENBERICHT

**Nummer der Anmeldung**

EP 11 16 4363

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | US 4 680 958 A (RUELLE JEAN-JACQUES [BE] ET AL) 21. Juli 1987 (1987-07-21)<br>* Spalte 9, Zeile 12 - Spalte 11, Zeile 42 *<br>* Spalte 12, Zeilen 32-44 *<br>----- | 1-7,10, 14-17<br>12<br>13 | INV.<br>G01N11/08<br><br>ADD.<br>G01N11/00 |
| X | US 5 932 800 A (CUMMINGS MICHAEL W [US] ET AL) 3. August 1999 (1999-08-03)<br>* das ganze Dokument *<br>----- | 1-11, 14-17 | |
| X | US 5 308 953 A (GRUDZIEN JR CHRISTOPHER P [US] ET AL) 3. Mai 1994 (1994-05-03)<br>* Spalte 5, Zeile 34 - Spalte 6, Zeile 24; Abbildungen 1,2 *<br>----- | 1-7,10, 14-17 | |
| X | JP 61 186833 A (MITSUBISHI HEAVY IND LTD) 20. August 1986 (1986-08-20)<br>* Zusammenfassung; Abbildung 1 *<br>----- | 1-7,10, 14-17 | |
| X | GB 1 496 414 A (CIBA GEIGY AG) 30. Dezember 1977 (1977-12-30)<br>* Seite 2, Zeile 111 - Seite 3, Zeile 73; Abbildung 1 *<br>----- | 1-7,10, 14-17 | **RECHERCHIERTE SACHGEBIETE (IPC)**<br><br>G01N |
| Y | US 7 730 769 B1 (KWON KYUNG C [US] ET AL) 8. Juni 2010 (2010-06-08)<br>* Zusammenfassung; Abbildung 1 *<br>* Spalte 5, Zeilen 9-23 *<br>* Spalte 6, Zeilen 45-65 *<br>* Spalte 8, Zeile 38 - Spalte 9, Zeile 3 *<br>* Spalte 10, Zeile 61 - Spalte 11, Zeile 30 *<br>----- | 12 | |
| Y<br>A | US 5 974 866 A (TJAHJADI MAHARI [US] ET AL) 2. November 1999 (1999-11-02)<br>* Zusammenfassung; Abbildung 1 *<br>* Spalte 6, Zeile 23 - Spalte 8, Zeile 9 *<br>----- | 12<br>13 | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 5. Januar 2012 | van Lith, Joris |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

......................................................................................

& : Mitglied der gleichen Patentfamilie, übereinstimmendes
Dokument

EPO FORM 1503 03.82 (P04C03)

**Europäisches Patentamt**
**European Patent Office**
**Office européen des brevets**

**EUROPÄISCHER RECHERCHENBERICHT**

Nummer der Anmeldung

EP 11 16 4363

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 4 245 517 A (BARKER ROBERT I ET AL) 20. Januar 1981 (1981-01-20) * Spalte 6, Zeile 30 - Spalte 7, Zeile 8; Abbildung 5 * ----- | 13 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 5. Januar 2012 | van Lith, Joris |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**Europäisches Patentamt**
**European Patent Office**
**Office européen des brevets**

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 11 16 4363

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-11, 14-17

   eine Aufnahme zum Einlegen einer Verpackung
   ---

2. Ansprüche: 12, 13

   eine Wiegeeinrichtung zur Bestimmung des Abrissgewichts der Probe
   ---

EP 2 518 469 A1

**ANHANG ZUM EUROPÄISCHEN RECHERCHENBERICHT
ÜBER DIE EUROPÄISCHE PATENTANMELDUNG NR.**

EP 11 16 4363

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-01-2012

| Im Recherchenbericht angeführtes Patentdokument | Datum der Veröffentlichung | Mitglied(er) der Patentfamilie | Datum der Veröffentlichung |
|---|---|---|---|
| US 4680958 A | 21-07-1987 | AU 578370 B2 | 20-10-1988 |
| | | AU 5976286 A | 22-01-1987 |
| | | CA 1257699 A1 | 18-07-1989 |
| | | DE 3667540 D1 | 18-01-1990 |
| | | EP 0210689 A1 | 04-02-1987 |
| | | ES 2000350 A6 | 16-02-1988 |
| | | FR 2585130 A1 | 23-01-1987 |
| | | IN 167028 A1 | 18-08-1990 |
| | | JP 62021040 A | 29-01-1987 |
| | | MX 168433 B | 25-05-1993 |
| | | US 4680958 A | 21-07-1987 |
| US 5932800 A | 03-08-1999 | KEINE | |
| US 5308953 A | 03-05-1994 | CA 2107565 A1 | 05-10-1992 |
| | | EP 0578785 A1 | 19-01-1994 |
| | | US 5209107 A | 11-05-1993 |
| | | US 5308953 A | 03-05-1994 |
| | | WO 9217764 A1 | 15-10-1992 |
| JP 61186833 A | 20-08-1986 | KEINE | |
| GB 1496414 A | 30-12-1977 | KEINE | |
| US 7730769 B1 | 08-06-2010 | KEINE | |
| US 5974866 A | 02-11-1999 | AU 733975 B2 | 31-05-2001 |
| | | AU 8186798 A | 11-03-1999 |
| | | BR 9803269 A | 03-11-1999 |
| | | CA 2245016 A1 | 28-02-1999 |
| | | DE 69809660 D1 | 09-01-2003 |
| | | DE 69809660 T2 | 19-02-2004 |
| | | EP 0899556 A2 | 03-03-1999 |
| | | ES 2187894 T3 | 16-06-2003 |
| | | JP 11153460 A | 08-06-1999 |
| | | SG 81242 A1 | 19-06-2001 |
| | | US 5974866 A | 02-11-1999 |
| | | US 6405579 B1 | 18-06-2002 |
| US 4245517 A | 20-01-1981 | AU 530059 B2 | 30-06-1983 |
| | | AU 5435480 A | 10-07-1980 |
| | | BR 8000037 A | 23-09-1980 |
| | | CA 1121176 A1 | 06-04-1982 |
| | | EP 0014025 A1 | 06-08-1980 |
| | | JP 55094141 A | 17-07-1980 |
| | | JP 61056937 B | 04-12-1986 |

Für nähere Einzelheiten zu diesem Anhang : siehe Amtsblatt des Europäischen Patentamts, Nr.12/82

17

**ANHANG ZUM EUROPÄISCHEN RECHERCHENBERICHT**
**ÜBER DIE EUROPÄISCHE PATENTANMELDUNG NR.**  EP 11 16 4363

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-01-2012

| Im Recherchenbericht angeführtes Patentdokument | Datum der Veröffentlichung | Mitglied(er) der Patentfamilie | Datum der Veröffentlichung |
|---|---|---|---|
| | | US 4245517 A | 20-01-1981 |

EPO FORM P0461

Für nähere Einzelheiten zu diesem Anhang : siehe Amtsblatt des Europäischen Patentamts, Nr.12/82